# EUROPÄISCHE PATENTSCHRIFT

(11) **EP 3 168 642 B1**
(45) Veröffentlichungstag und Bekanntmachung des Hinweises auf die Patenterteilung: **24.01.2018**
(21) Anmeldenummer: 16192730.6
(22) Anmeldetag: 07.10.2016
(51) Int. Cl.: G01S 17/48, G01S 7/481

(54) **OPTOELEKTRONISCHER SENSOR UND VERFAHREN ZUR ERFASSUNG EINES OBJEKTS**
OPTOELECTRONIC SENSOR AND METHOD FOR DETECTING AN OBJECT
CAPTEUR OPTOÉLECTRONIQUE ET PROCÉDÉ DE DÉTECTION D'UN OBJET

(30) Priorität: 13.11.2015 DE 102015119668
(43) Veröffentlichungstag der Anmeldung: 17.05.2017
(73) Patentinhaber: SICK AG, 79183 Waldkirch (DE)
(72) Erfinder: Hörsch, Herr Dr. Ingolf, 79102 Freiburg (DE); Merettig, Herr Gerhard, 79350 Sexau (DE); Wiethege, Friedhelm, 79350 Sexau (DE); Hofmann, Angelika, 81379 München (DE)

(56) Entgegenhaltungen:
- CN-A- 102 313 882
- DE-A1-102008 014 912
- DE-A1-102010 038 186
- DE-C5- 10 220 037
- US-A- 5 347 137

## Beschreibung

Die Erfindung betrifft einen optoelektronischen Sensor und ein Verfahren zur Erfassung eines Objekts nach dem Prinzip der Triangulation gemäß dem Oberbegriff von Anspruch 1 beziehungsweise 9. Das Prinzip der optischen Triangulation beruht darauf, einen Lichtsender und einen ortsauflösenden Lichtempfänger um einen bekannten Basisabstand gegeneinander versetzt anzuordnen. Sende- und Empfangslichtstrahl stehen dann in einem Winkel zueinander, was dazu führt, dass der Empfangslichtfleck auf dem Empfänger in Abhängigkeit von dem Abstand zu dem angetasteten Objekt wandert. Die Position des Empfangslichtflecks auf dem ortsauflösenden Lichtempfänger ist demnach ein Maß für den Objektabstand.

Es gibt nicht nur messende Triangulationstaster, die in der skizzierten Weise einen Abstand bestimmen und ausgeben, sondern auch schaltende Systeme nach dem Triangulationsprinzip, deren Schaltverhalten von dem Objektabstand abhängt. Zu diesen Sensoren gehören die hintergrundausblendenden Lichttaster. Sie sind schaltend, geben also lediglich ein binäres Objektfeststellungsignal aus. Zugleich wird aber der Aufbau eines Triangulationstasters ausgenutzt, um mit einem zumindest in einen Nah- und einen Fernbereich ortsauflösenden Lichtempfänger zwei Empfangssignale zu erzeugen. Deren Differenz wird mit einer Schaltschwelle bewertet, um so die Objekterfassung auf einen bestimmten Entfernungsbereich zu beschränken und Empfangssignale von Objekten außerhalb dieses Entfernungsbereichs als Hintergrundsignal auszublenden. Ein hintergrundausblendender Lichttaster ist beispielsweise in der DE 197 21 105 C2 offenbart, wobei hier Schalter vorgesehen sind, um die einzelnen Elemente eines ortsauflösenden Lichtempfängers auf veränderliche Weise dem Nah- oder Fernbereich zuzuordnen. Die DE 199 62 701 A1 beschreibt einen Lichttaster mit einem virtuellen Trennsteg.

Die Beziehung zwischen Objektabstand und Verschiebung des Empfangslichtflecks auf dem Lichtempfänger ist nichtlinear. Abstandsänderungen im Nahbereich führen zu großen, im Fernbereich dagegen nur zu kleinen Verschiebungen des Empfangslichtflecks. Zugleich ist der Empfangslichtfleck kein idealer mathematischer Punkt und dessen Ausdehnung zudem erneut vom Objektabstand abhängig, da die Empfangsoptik nicht den gesamten Abstandsbereich scharf abbilden kann. Diese Effekte führen zu Messungenauigkeiten und im Falle von hintergrundausblendenden Lichttastern zu einer Schaltpunktabweichung und damit zumindest manchmal zum Fehlschalten.

Besonders schwerwiegend sind diese Probleme bei glänzenden Objekten, weil dann die Empfängerpupille möglicherweise nur teilweise ausgeleuchtet wird. Es gibt zwar Sensoren, die sich speziell mit Glanzerkennung befassen. Dabei geht es dann aber darum, das glänzende Objekt überhaupt zu erfassen oder dessen Glanzgrad zu bestimmen. Eine triangulierende Abstandsbestimmung oder Hintergrundunterdrückung ist nicht vorgesehen und würde durch die speziell für Glanzerkennung eingeführten Maßnahmen auch nicht gelöst.

Es gibt im Stand der Technik Ansätze, die Empfangsoptik zu verbessern, um die Linearität zu verbessern oder den Messbereich für besonders nahe Objekte zu erweitern. Beispielsweise nutzt die DE 102 20 037 C5 eine zusätzliche Nahbereichslinse, die das Empfangslicht umso stärker in Richtung des Lichtsenders bricht, je näher sich das Objekt befindet. Das verbessert aber ausschließlich das Verhalten im Nahbereich.

Die DE 10 2008 014 912 A1 ordnet zwischen der Empfängerlinse und dem Lichtempfänger eine zusätzliche Korrekturlinse an. Dadurch wird der von der Empfängerlinse gebündelte Lichtstrahl gezielt so umgelenkt, dass es zu einer größeren Beabstandung der auftreffenden Lichtstrahlen auf dem Lichtempfänger und zu einer scharfen Abbildung kommt. Tatsächlich ist das aber mit einer Korrekturlinse, die den gesamten Empfangsstrahlengang beeinflusst, gar nicht möglich, sondern es wird allenfalls eine Teilverbesserung für einen gewissen Abstandsbereich erzielt.

Außer durch Triangulation ist optische Distanzmessung auch in koaxialen Systemen möglich, beispielsweise durch Lichtlaufzeitmessung. Damit dort die Empfangsoptik mit unterschiedlichen Entfernungen umgehen kann, werden sogenannte Mehrzonenlinsen eingesetzt, in denen konzentrische Ringe für bestimmte Abstandsbereiche zuständig sind, wie dies etwa in der US 5 347 137 vorgeschlagen wird. Eine solche Mehrzonenlinse passt mit ihrer Symmetrie nicht in einen Triangulationstaster. Jeder Gewinn im Nahbereich würde entsprechende zusätzliche Fehler im Fernbereich nach sich ziehen und umgekehrt.

Zum Aspekt einer Teilausleuchtung bei glänzenden Objekten tragen die bekannten Lösungen gar nichts bei.

Es ist daher Aufgabe der Erfindung, die Genauigkeit der optischen Triangulation zu verbessern.

Diese Aufgabe wird durch einen optoelektronischen Sensor und ein Verfahren zur Erfassung eines Objekts nach dem Prinzip der Triangulation gemäß Anspruch 1 beziehungsweise 9 gelöst. Dazu wird wie bei der optischen Triangulation üblich ein Lichtbündel in den Überwachungsbereich ausgesandt und das dort von einem Objekt remittierte Lichtbündel in einem Lichtempfänger registriert. Das remittierte Lichtbündel kann sowohl durch diffuse Remission als auch durch gerichtete Reflexion entstehen. Lichtsender und Lichtempfänger sind in einem Basisabstand zueinander versetzt angeordnet. Aufgrund dieser Triangulationsbasis ist die Position des Empfangslichtflecks, den das remittierte Lichtbündel auf dem Lichtempfänger erzeugt, von dem auch als Tastweite bezeichneten Abstand des Objekts abhängig, und deshalb kann der Objektabstand trianguliert werden.

Die Erfindung geht nun von dem Grundgedanken aus, ein in der konvergenten Strahlebene angeordnetes optisches Element, also dort, wo das remittierte Lichtbündel bereits durch die Wirkung der Empfangsoptik konvergent ist, für die Triangulation sowohl im Nah- als auch im Fernbereich zu optimieren. Dazu weist das optische Element einen konvergierenden Teilbereich und einen divergierenden Teilbereich auf und ist so angeordnet, dass ein remittiertes Lichtbündel aus dem Nahbereich durch den konvergierenden Teilbereich und ein remittiertes Lichtbündel aus dem Fernbereich durch den divergierenden Teilbereich fällt. Denn die Empfangsoptik selbst kann nur für einen bestimmten Tastweitenbereich scharf abbilden. Durch die unterschiedliche Wirkung des optischen Elements in Nahbereich und Fernbereich wird jeweils für eine Linearisierung und eine schärfere Abbildung des Empfangslichtflecks gesorgt. Außerdem bewirkt das optische Element eine effektive Konzentration beziehungsweise Mischung von Teilpupillenbündeln und somit eine homogenere Lichtverteilung im Empfangslichtfleck insbesondere bei glänzenden Objekten.

Die Erfindung hat also den Vorteil, dass durch die verbesserte Optik im Empfangspfad die Lichtfleckposition schärfer definiert ist und damit genauer bestimmt werden kann. Dies führt bei schaltenden Systemen, wie hintergrundausblendenden Lichttastern, zu einem präziser eingehaltenen Schaltpunkt und verhindert Fehlschalten. Außerdem werden auch glänzende Objekte zuverlässig erkannt, obwohl das von diesen Objekten reflektierte Lichtbündel möglicherweise nur eine Teilpupille der gesamten Empfängerpupille ausleuchtet.

Im Folgenden ist es manchmal einfacher, sich auf ein Koordinatensystem zu beziehen, in dem ohne jede Einschränkung der Allgemeinheit die Y-Achse Lichtsender und Lichtempfänger verbindet und somit die Richtung bezeichnet, in welcher der Empfangslichtfleck auf dem Lichtempfänger wandert, die Z-Achse die optische Achse des Lichtsenders ist und damit der Objektabstand längs der Z-Achse gemessen wird, und die X-Achse die verbleibende dritte Achse senkrecht zur Y-Achse und Z-Achse ist.

Das optische Element weist bevorzugt einen neutralen Teilbereich zwischen dem konvergierenden Teilbereich und dem divergierenden Teilbereich auf. Die Empfangsoptik ist selbst für einen mittleren Objektabstand zwischen Nah- und Fernbereich auf den Lichtempfänger fokussiert. Dann ist keine zusätzliche Strahlformung erforderlich. Der neutrale Teilbereich schafft einen kontinuierlichen Übergang zwischen dem konvergierenden Teilbereich und dem divergierenden Teilbereich, der auch die Herstellung und Anordnung des optischen Elements vereinfachen kann.

Das optische Element weist eine Freiformfläche mit dem konvergierenden Teilbereich und dem divergierenden Teilbereich auf. Das optische Element kann dabei auf Refraktion beruhen und wird dann vereinfachend als Linse bezeichnet, obwohl der Effekt anders ist als bei einer üblichen Sammel- oder Streulinse. Durch die Freiformfläche können die Strahlformwirkungen lokal angepasst werden, um insbesondere den unterschiedlichen Anforderungen in Nah- und Fernbereich gerecht zu werden. Bei einer Linse können Eintritts- und/oder Austrittsfläche Freiformflächen sein, oder eine der beiden Flächen bleibt plan oder zumindest in ihrer Geometrie deutlich weniger komplex oder ausgeprägt. Anstelle einer Linse kann auch ein reflexives Element, also ein Spiegel mit entsprechender Freiformfläche eingesetzt werden. Eine Alternative zu einer geometrischen Formung des optischen Elements ist ein diffraktives Element, das mit den gewünschten Beugungseffekten designt wird.

Die Freiformfläche weist lokale Krümmungen und/oder lokale Gradienten der Krümmung auf und fokussiert und/oder vermischt so Teilpupillenbündel des remittierten Lichtbündels. Die Freiform kann also durch lokale Krümmung für eine paraxiale Fokussierung und durch lokale Gradienten der Krümmung für eine Durchmischung der Teilbündel ausgelegt werden.

Ein Teilpupillenbündel ist ein Teilbündel, das nur einen Teil der Eintrittspupille beleuchtet. Zur Erläuterung sei hier ein paraxiales Teilbündel als ein minimales Teilbündel betrachtet, infinitesimal um die optische Achse des einfallenden Lichts herum. Dessen Fokussierung erfolgt durch die Kombination der lokalen Krümmungen auf beiden Seiten der Freiform. Man kann also die lokalen konvexen beziehungsweise konkaven lokalen Krümmungen der Freiform so wählen, dass sich eine Fokussierung auf eine gemeinsame Brennebene in der Ebene des Lichtempfängers einstellt. In diesem Zusammenhang ist Fokussierung allgemein im Sinne des Erreichens einer gemeinsamen Brennfläche zu verstehen, was möglicherweise auch eine Verlängerung der Brennweite bedeutet.

Die Durchmischung erfolgt dadurch, dass die Teilbündel aufgrund ihrer endlichen Ausdehnung gerade nicht ideal paraxial sind, sondern Bereiche der Freiform mit unterschiedlichen lokalen Krümmungen transmittieren, die aber nur für die Fokussierung eines paraxialen Teilbündels ausgelegt sind. Dadurch werden diese nicht-paraxialen realen Teilbündel beim Durchtritt durch die Freiform etwas weniger fokussiert und folglich aufgeweitet. Aufgrund der lokalen Krümmungsgradienten ergeben sich unterschiedliche Aufweitungsgrößen und Auftrefforte in Abhängigkeit von den unterschiedlichen Durchtrittsbereichen der Freiform. Deshalb durchmischen sich die Teilbündel. Der lokale Krümmungsgradient ist auf der Freiform erkennbar. Beispielsweise hat eine Welle aus einer konvexen und konkaven Form auf der Außenfläche einen lokalen Krümmungsgradienten, zwei aneinandergesetzte Zylinder haben dagegen eine konstante lokale Krümmung.

Wie im modernen rechnergestützten Optikdesign üblich, lässt sich die durch Optimierungsverfahren entstehende Freiform nicht in einfachen Worten geometrisch beschreiben. Dazu sind die Formen zu komplex, und zudem können sich verschiedene zumindest nahezu gleichwirkende Optimierungen geometrisch stark unterscheiden. Die zu erzielende Strahlformungswirkung in Y-Richtung, also längs dem Basisabstand auf der Verbindungslinie von Lichtsender und Lichtempfänger, und der dazu senkrechten X-Richtung ist im Allgemeinen unterschiedlich und weitgehend unabhängig durch jeweilige Krümmungen oder Krümmungsgradienten in diesen beiden Richtungen quer zur Strahlrichtung einstellbar. Der Triangulationseffekt tritt in erster Betrachtung nur längs der Y-Richtung auf, was sich natürlich auf die zu optimierende Freiformfläche auswirkt.

Das optische Element weist bevorzugt in einem Schnitt längs des Basisabstands die Grundform einer einzelnen Welle auf. Die Welle verläuft längs des Basisabstands, also in Y-Richtung, und besteht aus einem konkaven und einem konvexen Bogen. Dadurch entstehen konvergierender und divergierender Teilbereich, wobei die Krümmung bei einem refraktiven optischen Element und einem reflexiven optischen Element natürlich komplementär ist. Grundform bedeutet hier und im Folgenden, dass Abweichungen für eine zusätzliche Optimierung denkbar sind, die aber den Ausgangspunkt, nämlich hier die Welle, weiterhin klar erkennen lassen.

Das optische Element weist bevorzugt die Grundform eines quer aus der Welle extrudierten Körpers auf. Die Form einer Welle entspringt zunächst einer zweidimensionalen Betrachtung. Durch Extrudieren in Querrichtung zu der Welle entsteht ein dreidimensionaler Körper der Linse oder des Spiegels, der in jedem Schnitt die Form der Welle aufweist.

Das optische Element weist bevorzugt zusätzlich quer zu der Welle eine konvergierende Krümmung auf. Ein reiner Extrusionskörper wäre in X-Richtung plan. Natürlich kann aber auch hier die Formgebung der Freiformfläche zur weiteren Verbesserung beitragen. Eine konvergierende Wirkung macht den Empfangslichtfleck kleiner, sorgt somit für eine höhere Energiedichte. Diese Wirkung in X-Richtung gibt es im Gegensatz zu der Welle in Y-Richtung sowohl im Nah- wie im Fernbereich. Trotzdem kann vorzugsweise die Krümmung in Nah- und Fernbereich unterschiedlich stark ausgelegt sein, insbesondere im divergierenden Teilbereich beziehungsweise konkaven Fernbereich eine eher geringe und im konvergierenden Teilbereich beziehungsweise konvexen Nahbereich eine eher hohe Krümmung.

Die Freiformfläche ist bevorzugt aus der Grundform weiter optimiert, um schräg einfallende Lichtbündel zu berücksichtigen. Die bisherige Betrachtung war jeweils auf die X-Achse und die Y-Achse beschränkt. Das berücksichtigt die räumlichen Effekte noch nicht, denn es gibt natürlich auch schräg zu den Achsen einfallende Lichtanteile. Von der Grundform ausgehend können feinere Anpassungen der Freiformfläche dazu beitragen, dass solche schrägen Lichtbündel die gewünschten Strahlformungen nicht beeinträchtigen.

Das optische Element bewirkt bevorzugt zusätzlich eine prismatische Verkippung des remittierten Lichtbündels. Das kann durch Formgebung und/oder verkippte Anordnung des optischen Elements erreicht werden. Die prismatische Verkippung ist nochmals bevorzugt vom Auftreffpunkt des remittierten Lichtbündels abhängig, also je nach Objektabstand unterschiedlich stark ausgeprägt. Damit kann die prismatische Verkippung insbesondere zur Linearisierung der Triangulation beitragen.

Das optische Element ist bevorzugt zu einem rechteckigen oder trapezförmigen Rahmen beschnitten. Das optische Element bildet also in einer Draufsicht ein Rechteck oder Trapez und ist damit insgesamt grob quaderförmig, abgesehen von der Freiformfläche auf Vorder- und/oder Rückseite, wo das remittierte Lichtbündel das optische Element durchdringt. Es entstehen also durch das Beschneiden optisch so gut wie keine Einbußen, während sich die Handhabung, Unterbringung und Halterung deutlich erleichtert.

Der divergierende Teilbereich weist bevorzugt Dämpfungseigenschaften für das remittierte Lichtbündel auf. Das lässt sich beispielsweise durch Aufrauen, Beschichten, Wegspiegeln oder Absorbieren an der Oberfläche oder im Material des optischen Elements erreichen. Im Nahbereich wird typischerweise zu viel Energie empfangen. Durch eine Dämpfung in dem optischen Element kann somit die Empfangsdynamik verringert werden, ohne dadurch die Detektionseigenschaften im Nahbereich zu beeinträchtigen.

Das optische Element ist bevorzugt zugleich als optisches Filter ausgebildet. Erneut lässt sich das insbesondere durch Beschichtung oder Material erreichen, wobei hier aber nicht lediglich eine Dämpfung gemeint ist und der Effekt sich vorzugsweise auf das gesamte Empfangslicht und nicht nur den Nahbereich bezieht. Beispiele sind eine optische Bandpasswirkung, die auf die Wellenlänge des Lichtsenders abgestimmt ist, ein Polarisationsfilter oder allgemein diffraktiv-optische Eigenschaften.

Der Sensor ist bevorzugt als hintergrundausblendender Lichttaster ausgebildet, bei dem der Lichtempfänger einen Nahbereich und einen Fernbereich mit einem Trennsteg dazwischen aufweist und der einen Schaltausgang aufweist, dessen Schaltzustand davon abhängt, ob ein Objekt im Nahbereich erfasst ist.

Das Funktionsprinzip eines hintergrundausblendenden Lichttasters wurde einleitend kurz erläutert. Von der Lage des Trennstegs hängt ab, welche Signale als Hintergrund ausgeblendet werden. Deshalb sollte für eine präzise Detektion mit einer Entfernungsänderung des Objekts ein möglichst großer Lichtmengenanteil über den Trennsteg verschoben werden. Das wird durch das erfindungsgemäße optische Element erreicht. Der Trennsteg kann die physische Trennlinie zwischen einem Nah- und einem Fernempfangselement sein. Häufig ist ein virtueller Trennsteg gemeint, der elektronisch verstellbar ist, indem Einzellichtempfänger durch einfaches oder gewichtetes Zusammenschalten zu dem Nah- und Fernelement verbunden werden. Durch solche Gewichtungen ist sogar eine Verschiebung des Trennstegs mit Subpixelauflösung möglich.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: ein Blockschaltbild eines optoelektronischen Sensors nach dem Triangulationsprinzip;
- Fig. 2: eine dreidimensionale Ansicht eines optischen Elements zur Anordnung zwischen Sendeoptik und Lichtempfänger;
- Fig. 3: eine vergrößerte Detailansicht der Anordnung des optischen Elements zwischen Sendeoptik und Lichtempfänger;
- Fig. 4a: ein beispielhafter Strahlverlauf in einem herkömmlichen Triangulationstaster mit einem Objekt im Nahbereich;
- Fig. 4b: eine schematische Darstellung des Empfangslichtflecks auf dem Lichtempfänger in der Situation gemäß Figur 4a;
- Fig. 4c: ein beispielhafter Strahlverlauf ähnlich Figur 4a jedoch in einem erfindungsgemäßen Sensor mit optischem Element zwischen Sendeoptik und Lichtempfänger;
- Fig. 4d: eine schematische Darstellung des Empfangslichtflecks auf dem Lichtempfänger in der Situation gemäß Figur 4c;
- Fig. 5a-d: Darstellungen analog den Figuren 4a-d jedoch mit einem Objekt in einem mittleren Entfernungsbereich;
- Fig. 6a-d: Darstellungen analog den Figuren 4a-d jedoch mit einem Objekt im Fernbereich;
- Fig. 7a: eine schematische Darstellung des Strahlverlaufs bei Erfassung eines glänzenden Objekts mit Teilpupillenbeleuchtung, die zu einem Fehlschalten führt;
- Fig. 7b: eine Darstellung ähnlich Figur 7a jedoch mit näherem glänzenden Objekt, das nun fehlerhaft übersehen wird;
- Fig. 8: eine Darstellung von Teilstrahlenbündeln des remittierten Lichtbündels und der dadurch bewirkten Teilpupillenbeleuchtung; und
- Fig. 9: ein Vergleich der Lichtfleckposition bei verschiedenen Teilpupillenbeleuchtungen in einem Referenzfall ohne das optische Element und gemäß Erfindung mit dem optischen Element.

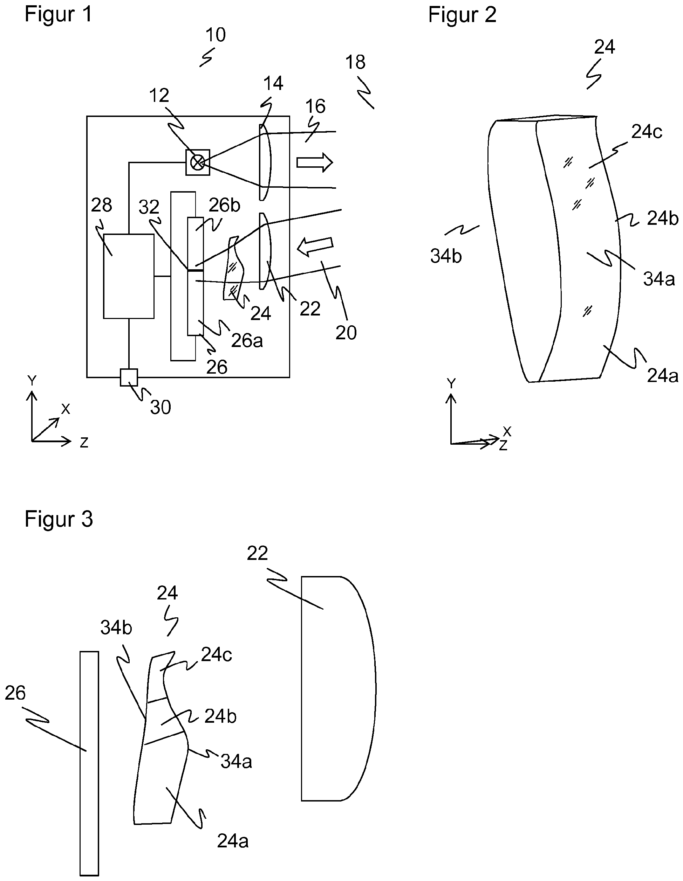

Figur 1 zeigt eine schematische Schnittdarstellung eines optoelektronischen Sensors 10 nach dem Triangulationsprinzip in einer Ausführung als hintergrundausblendender Lichttaster. Ein Lichtsender 12 sendet über eine strahlformende Sendeoptik 14 ein Lichtbündel 16 in einen Überwachungsbereich 18 aus. Fällt das Lichtbündel 16 in dem Überwachungsbereich 18 auf ein Objekt, so gelangt ein Teil davon als remittiertes Lichtbündel 20 zurück zu dem Sensor 10.

Eine Empfangsoptik 22 bündelt das remittierte Lichtbündel 20. Anschließend wird das remittierte Lichtbündel 20 in einem optischen Element 24 weiter strahlgeformt und fällt dann auf einen Lichtempfänger 26, der daraus ein elektrisches Empfangssignal erzeugt. In der dargestellten Ausführungsform des Sensors 10 ist eine Hintergrundausblendung vorgesehen. Deshalb ist der Lichtempfänger 26 in ein Nahbereichselement 26a und ein Fernbereichselement 26b unterteilt. Der Auftreffort des remittierten Lichtbündels 20 beziehungsweise des davon erzeugten Empfangslichtflecks auf dem Lichtempfänger 26 hängt wegen der Triangulationsanordnung in dem Sensor 10 von der Entfernung des angetasteten Objekts ab, an dem das remittierte Lichtbündel 20 zurückgeworfen wird. Der Versatz zwischen Lichtsender 12 und Lichtempfänger 26 längs einer hier als Y-Achse bezeichneten Richtung bildet eine Triangulationsbasis. Das führt insbesondere dazu, dass der Empfangslichtfleck von einem fernen Objekt, also mit großem Abstand längs einer hier als Z-Achse bezeichneten Richtung, auf dem Fernbereichselement 26b und von einem nahen Objekt auf dem Nahbereichselement 26a registriert wird.

Eine Auswertungseinheit 28 ist mit dem Lichtempfänger 26 verbunden, um aus den elektrischen Empfangssignalen je nach Anwesenheit eines Objekts im Nahbereich ein Objektfeststellungssignal zu bestimmen, das an einem Schaltausgang 30 ausgegeben wird. Die Auswertungseinheit 28 bildet zur Hintergrundausblendung die Differenz zwischen dem Signal des Nahbereichselements 26a und des Fernbereichselements 26b und bewertet diese Differenz mit einer Schwelle. Dementsprechend wird an einem Schaltausgang 30 ein Schaltsignal erzeugt, dass eine Objektfeststellung anzeigt, wenn ein Objekt im Nahbereich detektiert wird, und keine Objektfeststellung, wenn kein Objekt oder nur ein Objekt im auszublendenden Fernbereich detektiert wird. Die Auswertungseinheit 28 steuert außerdem den Lichtsender 12.

Anstelle eines zweielementigen Lichtempfängers 26 kann eine PSD (Position Sensitive Device) oder eine Empfängerzeile eingesetzt werden. Die Pixel der Empfängerzeile können eine unterschiedliche Breite aufweisen, um die nichtlineare Abhängigkeit der Verschiebung des Lichtflecks auf dem Lichtempfänger 26 von dem Abstand des Objekts zumindest teilweise auszugleichen. Für die Hintergrundausblendung wird per Werkseinstellung, Parametrierung oder Einlernen ein Trennsteg 32 definiert, der die Pixel in zwei Gruppen und damit den Lichtempfänger 26 in das Nah- und das Fernbereichselement 26a-b unterteilt. Die Lage des Trennstegs 32 kann elektronisch veränderbar sein.

Die Ortsauflösung des Lichtempfängers 26 muss nicht notwendig nur für eine Unterteilung in Nah- und Fernbereich genutzt werden. Zum einen sind zusätzliche Trennstege und Entfernungsbereiche denkbar. Außerdem kann die Triangulation zu einer Entfernungsmessung statt zu einer Hintergrundausblendung verwendet werden, der Sensor 10 ist dann ein entfernungsmessender Triangulationstaster.

Dies sind nur einige Aspekte, in denen der Aufbau des Sensors 10 gemäß Figur 1 verändert werden kann. Die Erfindung betrifft in erster Linie das optische Element 24, dessen Eigenschaften im Folgenden genauer erläutert werden. Sonstige Eigenschaften eines Sensors 10 nach dem Prinzip der Triangulation können in an sich bekannter Weise variiert werden, wozu beispielsweise ergänzend zum allgemeinen Funktionsprinzip auf die einleitend schon erwähnten DE 197 21 105 C2 oder DE 199 62 701 A1 verwiesen wird.

Figur 2 zeigt das optische Element 24 in einer dreidimensionalen Ansicht, während Figur 3 vergrößert eine beispielhafte Anordnung des optischen Elements 24 zwischen Empfangsoptik 22 und Lichtempfänger 26 illustriert, also im konvergenten Strahlengang des remittierten Lichtbündels 20 nach Bündelung durch die Empfangsoptik 22. Das optische Element 24 ist hier eine Freiformlinse, basiert also auf Refraktion. Alternativ wäre auch eine reflexive Wirkung, d.h. ein Spiegel mit entsprechender Kontur, oder ein diffraktives optisches Element möglich.

Das optische Element 24 weist eine Vorderfläche 34a und eine Rückfläche 34b auf, die beide als Freiformflächen ausgebildet sind. Es wäre auch denkbar, eine der Flächen 34a-b plan auszubilden, wodurch aber die Freiheitsgrade der Optimierung reduziert werden. In der Y-Richtung, in welcher Lichtsender 12 und Lichtempfänger 26 voneinander beabstandet sind und in welcher der Empfangslichtfleck in Abhängigkeit von dem Objektabstand wandert, zeigt das optische Element 24 eine wellenartige Kontur. Dadurch entstehen ein konvergierender Teilbereich 24a und, mit einem Übergangsbereich 24b, ein divergierender Teilbereich 24c. Die wellenartige Kontur ist auf der Vorderfläche 34a ausgeprägter als auf der Rückfläche 34b. Das führt zu einer bauchigen Gesamtform. Die Teilbereiche 24a-c gehen ohne scharfe Abgrenzung ineinander über. Außerdem ist auch vorstellbar, das optische Element 24 auf zwei Elemente für den Nahbereich und den Fernbereich aufzuteilen. Dann könnte sogar auf eines der beiden Elemente verzichtet werden, mit der absehbaren Folge, dass im entsprechenden Entfernungsbereich keine zusätzliche vorteilhafte Strahlformung stattfindet.

In Quer- oder X-Richtung ist das optische Element 24 in erster Näherung ein Extrusionskörper, bei dem sich die wellenartige Kontur in jedem Schnitt wiederholt. Das ist allerdings nur die Grundform, die dann weiter im Hinblick auf die noch zu erläuternde angestrebte Strahlformungswirkung optimiert wird. Beispielsweise müssen im dreidimensionalen Raum schräg zu den Achsen einfallende Lichtbündel berücksichtigt werden. Außerdem kann es vorteilhaft sein, in X-Richtung insgesamt eine konvergierende Kontur vorzusehen, um das remittierte Lichtbündel 20 in dieser Achse zu konzentrieren.

Das optische Element 24 ist an den Seiten beschnitten. Dadurch entsteht ein rechteckiger oder trapezförmiger Rahmen beziehungsweise eine insgesamt quaderähnliche Gestalt. Das hat kaum Auswirkungen auf die Strahlformungseigenschaften, vereinfacht aber die Handhabung, Unterbringung und Halterung.

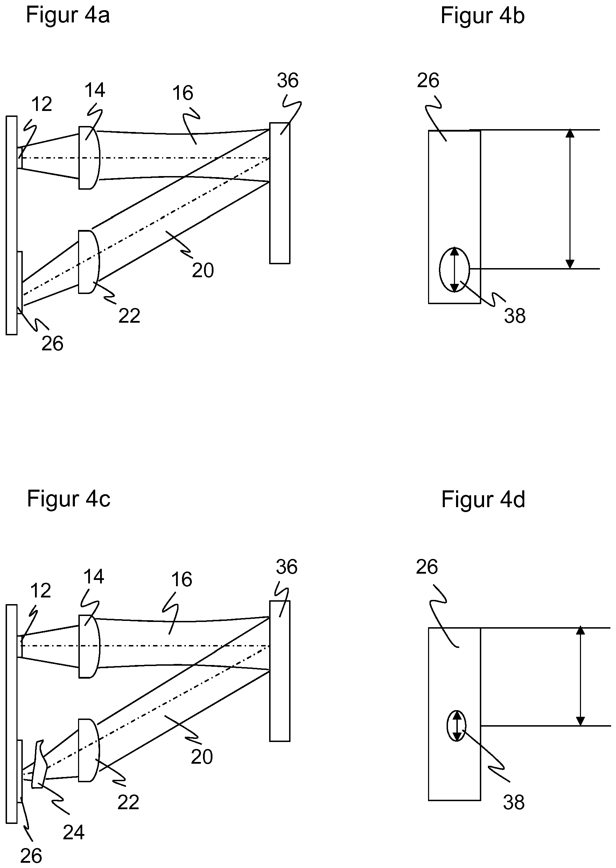

Die dargestellte Form des optischen Elements 24 ist das Ergebnis einer Optimierung, deren Ziel es ist, dass in Y-Richtung wie in X-Richtung eine vom Auftreffquerschnitt und Auftreffort des remittierten Lichtbündels 20 auf dem optischen Element 24, somit letztlich von dem Objektabstand abhängige Fokussierung beziehungsweise Defokussierung mit einer effektiven Konzentration und/oder Mischung von Teilpupillenbündeln zu erreichen. Dabei wird die Wirkung in Y- und X-Richtung im Allgemeinen unterschiedlich sein. Weiterhin soll ebenfalls in Abhängigkeit von dem Objektabstand eine prismatische Verkippung der Mittelpunktstrahlen in Richtung der Flächennormalen des Lichtempfängers 26 erzielt werden. Diese Effekte und deren Vorteile werden sogleich unter Bezugnahme auf die weiteren Figuren 4 bis 9 erläutert.

Dieselben Optimierungsziele können auch zu einer abweichenden Form des optischen Elements 24 führen. Der konvergierende Teilbereich 24a und der divergierende Teilbereich 24c wird bei der Optimierung erhalten bleiben. Die detaillierte Formgebung ist aber auf das dargestellte optische Element 24 nicht beschränkt.

Die Figuren 4 bis 6 illustrieren den verbesserten Strahlenverlauf an dem optischen Element 24 bei einer nahen, mittleren und fernen Tastweite, also einem angetasteten Objekt 36 im entsprechenden Abstand. Dabei ist jeweils zunächst zur Referenz als Figur 4a, 5a oder 6a der Strahlenverlauf in einem herkömmlichen Sensor ohne das optische Element 24 und als Figur 4c, 5c oder 6c der Strahlenverlauf in einem erfindungsgemäßen Sensor 10 gezeigt. Die weiteren Figuren 4b, 5b, 6b und 4d, 5d, 6d zeigen den jeweiligen zugehörigen Empfangslichtfleck 38 auf dem Lichtempfänger 26.

Die Empfangsoptik 22 ist in diesem Beispiel eine einzelne konvergierende Empfängerlinse, die so fokussiert ist, dass sie das Objekt 36 in einem mittleren Tastweitenbereich scharf auf den Lichtempfänger 26 abbildet. Für kleinere und größere Tastweiten wird die Abbildung dagegen unscharf und damit die Energieverteilung des Empfangslichtflecks 38 auf dem Lichtempfänger 26 weniger konzentriert. Die Positionsänderung des Empfangslichtflecks 38 auf dem Lichtempfänger pro Tastweitenänderung ist im Nahbereich groß und im Fernbereich klein. Dabei ist eine Möglichkeit, die Position des Empfangslichtflecks 38 zu bestimmen, der ungewichtete Schwerpunkt oder auch Median der Energieverteilung des Empfangslichtflecks 38.

Das optische Element 24 bewirkt nun eine Energiekonzentration zumindest im Nah- und Fernbereich sowie eine Ablenkung der Lage des Medians des Empfangslichtflecks 38 vom jeweiligen Mittelpunktstrahl, und zwar im Nahbereich hin zum Mittelpunktstrahl und im Fernbereich weg vom Mittelpunktstrahl.

Im Nahbereich, der in Figur 4 illustriert ist, wird das einfallende remittierte Lichtbündel 20 durch die konvexe Linsenfläche des konvergierenden Teilbereichs 24a zusätzlich fokussiert, und dadurch wird die Energie auf dem Lichtempfänger 26 konzentriert. Ohne die Wirkung des konvergierenden Teilbereichs 24a würde das Bild des Objekts 36 hinter dem Lichtempfänger 26 liegen, und dementsprechend wäre die Energie des Empfangslichtflecks 38 auf dem Lichtempfänger 26 weniger konzentriert. Außerdem wird der Empfangslichtfleck 38 deutlich prismatisch nach oben verkippt.

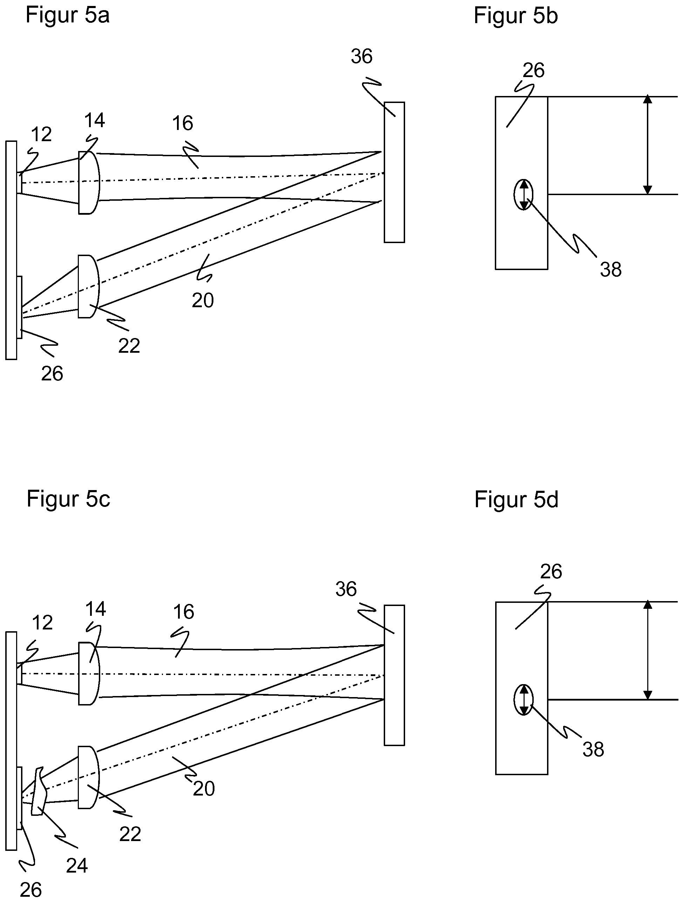

In einem mittleren Bereich, der in Figur 5 illustriert ist, bleibt das einfallende remittierte Lichtbündel 20 von dem optischen Element 24 weitgehend unbeeinflusst und dadurch die durch die Empfangsoptik 22 bereits fokussierte Lage und Form des Empfangslichtflecks 28 weitgehend erhalten. Ein solches remittiertes Lichtbündel 20 fällt hauptsächlich auf den neutralen Übergangsbereich 24b des optischen Elements.

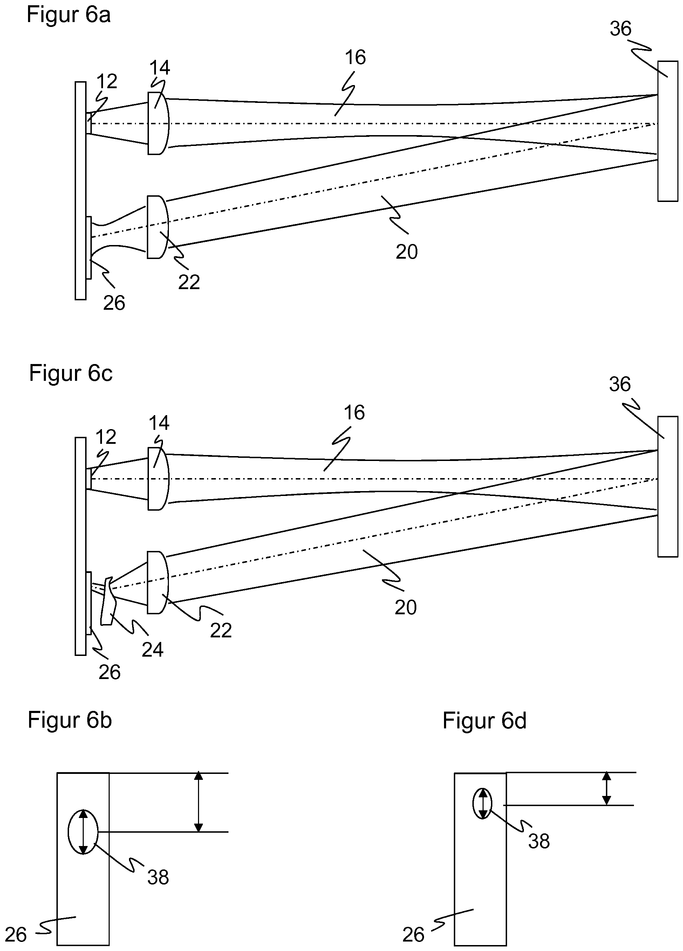

Im Fernbereich, der in Figur 6 illustriert ist, wird das einfallende remittierte Lichtbündel durch die konkave Linsenfläche des divergierenden Teilbereichs 24c defokussiert. Auch das führt zu einer Konzentration der Energie auf dem Lichtempfänger 26, denn ohne die Wirkung des divergierenden Teilbereichs 24c würde das Bild des Objekts 36 vor dem Lichtempfänger 26 liegen, und dementsprechend wäre der Empfangslichtfleck 38 weniger konzentriert. Die prismatische Verkippung des Empfangslichtflecks 38 nach oben ist im Fernbereich deutlich weniger ausgeprägt als im Nahbereich.

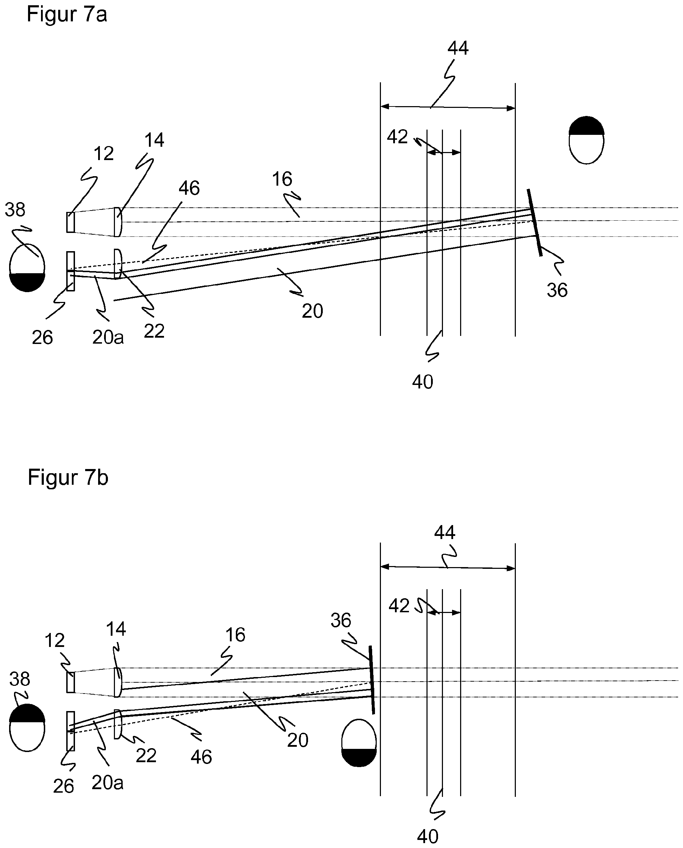

Damit sind zwei Effekte des optischen Elements 24 veranschaulicht: Es trägt erheblich dazu bei, dass die Tastweitenabhängigkeit der Lichtfleckgröße sowie die Nichtlinearität des Versatzes des Empfangslichtflecks 38 je Tastweitenänderung deutlich reduziert ist. Ein weiteres Problem von Sensoren nach dem Prinzip der Triangulation sind Teilpupillenbeleuchtungen bei der Erfassung glänzender Objekte 36. Dies wird zunächst anhand der Figur 7 verdeutlicht.

Ein hintergrundausblendender Lichttaster unterteilt den Überwachungsbereich 18 in einen Vordergrund, in dem bei der Erfassung eines Objekts 36 geschaltet werden soll, und einen auszublendenden Hintergrund. Dabei entspricht die Grenze 40 zwischen Vorder- und Hintergrund dem Trennsteg 32. Allerdings wird in der Praxis diese Grenze 40 mit einer Schalthysterese ausgewertet, wie durch den Hysteresebereich 42 eingezeichnet. Das verhindert ein rasches Hin- und Herschalten aufgrund von Messschwankungen bei einem Objekt 36 nahe der Grenze 40.

Bei derartigen Lichttastern tritt außerdem eine sogenannte Schwarz-Weiß-Verschiebung auf. Darunter versteht man eine scheinbare Entfernungsänderung aufgrund der Remissionseigenschaften von Objekten 36. Ein schwach remittierendes Objekt 36 erzeugt in einer anderen Entfernung ein über- beziehungsweise unterschwelliges Empfangssignal als ein stark remittierendes oder gar spiegelndes beziehungsweise glänzendes Objekt 36. Solange man die Remissionseigenschaften der zu detektierenden Objekte 36 nicht vorab kennt, führt dies also zu einer Messungenauigkeit. Dies wird durch ein weiteres Toleranzintervall 44 berücksichtigt.

Ein glänzendes Objekt 36 kann aber selbst außerhalb von Hysteresebereich 42 und Toleranzintervall 44 noch zu einem Fehlschalten führen, weil unter Umständen nur ein Teil der Empfängerpupille beleuchtet ist und dies eine erhebliche Abweichung der Tastweitenbestimmung nach sich zieht. Ein glänzendes Objekt 36 wirft Licht nicht entsprechend einer Lambert-Charakteristik in alle Raumrichtungen zurück, sondern bevorzugt in der Rückreflexion deutlich bestimmte Richtungen, die von der Orientierung der glänzenden oder spiegelnden Fläche des Objekts 36 abhängen. Die Empfängerpupille wird dadurch nur teilweise beleuchtet, etwa in der oberen, unteren, rechten oder linken Linsenhälfte oder noch kleineren Abschnitten. Befindet sich das Objekt 36 nun nicht in der Bildweite der Empfangsoptik 22, also im mittleren Entfernungsbereich, so wird ohne das optische Element 24 das Objekt 36 unscharf abgebildet. Je nachdem, welcher Teil der Empfängerpupille beleuchtet wird, ergibt sich also eine unterschiedliche Medianposition auf dem Lichtempfänger 26 und damit ein Fehler bei der Tastweitenbestimmung.

Figur 7a zeigt ein Fehlschalten für ein zu fernes glänzendes Objekt 36, das eigentlich ausgeblendet werden müsste. Ein Teilbündel 20a des remittierten Lichtbündels 20 beleuchtet nur einen unteren Teil der Empfangsoptik 22. Dementsprechend fällt viel Energie auf das Nahbereichselement 26a, und der Sensor 10 schaltet ein. Der ideale Mittenstrahl 46 dagegen würde das Fernbereichselement 26b treffen und korrekt ausgeblendet.

Figur 7b zeigt einen entsprechenden Fehlerfall bei einem nahen glänzenden Objekt 36, das irrtümlich übersehen wird. In dieser Konstellation beleuchtet ein Teilbündel 20a des remittierten Lichtbündels 20 nur den oberen Teil der Empfangsoptik 22, und dadurch fällt viel Energie auf das Fernbereichselement 26b, die eine falsche Hintergrundausblendung bewirkt. Der ideale Mittenstrahl 46 dagegen würde das Nahbereichselement 26a treffen und der Sensor 10 dann einschalten.

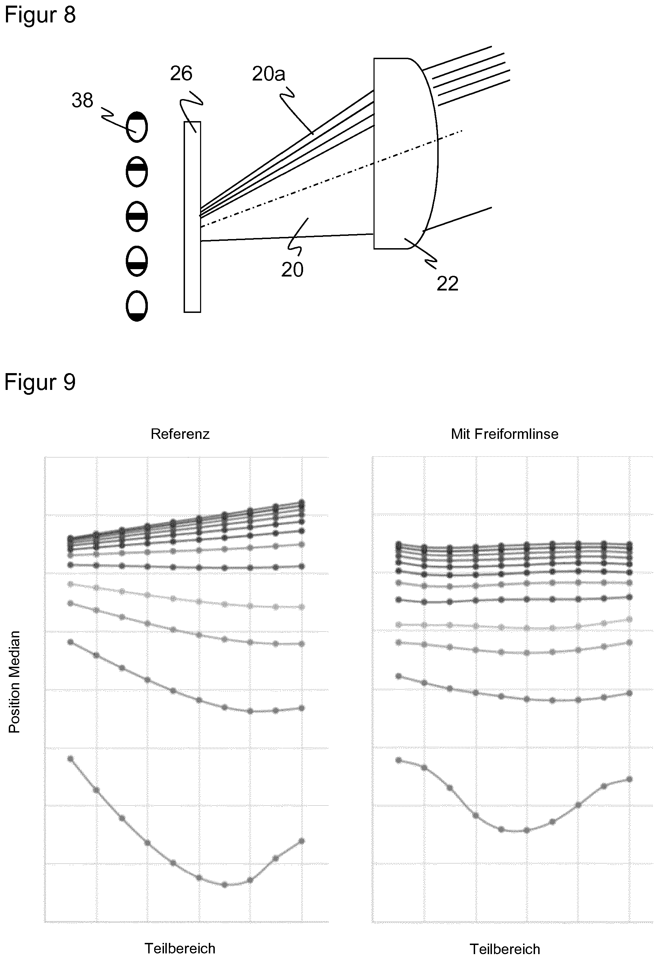

Figur 8 zeigt noch einmal die Auswirkungen der Teilpupillenbeleuchtung ohne das optische Element 24. Verschiedene Teilstrahlen, die in unterschiedlicher Höhe auf die Empfangsoptik 22 fallen, resultieren bei unzureichender Fokussierung in Empfangslichtflecken mit entsprechend streifenförmig erhöhter Energiedichte, so dass sich die effektive Medianposition und damit der gemessene Objektabstand gegenüber einer homogen ausgeleuchteten Empfängerpupille verschiebt.

Das optische Element 24 minimiert auch diese unerwünschten Effekte durch Teilpupillenbeleuchtung, ohne die sonstige Sensorperformance zu beeinträchtigen, denn der Empfangslichtfleck 38 ist auch im Nah- und Fernbereich wesentlich besser fokussiert. Dadurch wirkt sich die Medianverschiebung ungleich schwächer auf die Messung aus.

Systematisch wird diese Verbesserung durch das optische Element 24 bei Teilpupillenbeleuchtung in Figur 9 illustriert. Die Empfangsoptik 22 wird in einer Simulation jeweils nur in einem von zehn übereinanderliegenden Streifen ähnlich der Darstellung in Figur 8 beleuchtet. Diese Streifen oder Teilbereiche sind auf der X-Achse aufgetragen. Die Y-Achse stellt die jeweilige Medianposition dar, und zwar mit je einer Kurve für unterschiedliche Tastweiten. Die linke Grafik der Figur 9 ist eine Referenz ohne das optische Element 24, die rechte Grafik zeigt die Verbesserung durch die Erfindung.

Die ideale Situation wäre, wenn sämtliche Kurven parallel zur X-Achse verliefen. Das würde nämlich heißen, dass die Medianposition gänzlich unabhängig davon ist, weleher Teil der Empfängerpupille beleuchtet wird. Die Lage der jeweiligen Kurve auf der Y-Achse würde allein von der Tastweite bestimmt. In der Referenz auf der linken Seite ist dies bei Weitem nicht der Fall, was nur eine summarische Darstellung der schon anhand von Figur 7 erläuterten Probleme ist.

Erfindungsgemäß verlaufen die Kurven, wie rechts in Figur 9 zu sehen, zumindest weitgehend horizontal. Durch den Einsatz des optischen Elements 24 wird also das Schaltverhalten signifikant robuster gegen Teilbeleuchtungen der Empfängerpupille, wie sie vornehmlich bei der Erfassung glänzender Objekte 36 auftreten, beziehungsweise die Messgenauigkeit des Abstands wird sehr viel genauer.

Zusammenfassend ergeben sich wegen der tastweitenabhängigen Strahlformung durch das optische Element 24 eine effektive Homogenisierung der Teilpupillenempfindlichkeit, Verbesserungen der triangulierenden Energiedichte und zumindest eine gewisse Kompression und Linearisierung der Triangulationskurve, also der Position des Medians des Empfangslichtflecks 38 in Abhängigkeit von der Tastweite beziehungsweise dem Objektabstand. Daraus ergibt sich eine verringerte Tastweitenabhängigkeit des Sensors 10 von Remissionseigenschaften der Objekte und eine Vereinfachung und Verbesserung der für den Anwender nützlichen Tastweiteneinstellung.

In Vergleichen mit Referenzen ähnlich der Figur 9 können weitere Charakteristika eines Sensors 10 nach dem Prinzip der Triangulation untersucht werden. Das ist zum einen der schon öfter erwähnte Median, also die Medianposition der Energieverteilung in Y- oder Triangulationsrichtung. Die Triangulationsdynamik bezeichnet die differentielle Änderung des Medians in Y-Richtung in Abhängigkeit von der Tastweite und die Energiedichte die lokale Energiedichte auf dem Lichtempfänger 26 im Median. Die triangulierende Energiedichte schließlich ist das Produkt aus Triangulationsdynamik und Energiedichte. Alle diese Eigenschaften werden zumindest im Fernbereich verbessert. Ein geringer Verlust im Nahbereich ist damit überkompensiert, da dort ohnehin große Reserven vorhanden sind.

Bei einem Sensor 10 nach dem Prinzip der Triangulation hängt die Diskriminierung des Vordergrundes gegenüber dem Hintergrund stark von der triangulierenden Energiedichte ab, die also möglichst groß sein soll. Der Einstellbereich wird durch den Abstand zwischen maximaler und minimaler Lage des Medians bestimmt, der also möglichst komprimiert werden sollte. Die Einstellungspräzision schließlich ist abhängig von der Linearität der Triangulationsdynamik. Sämtliche drei Effekte werden durch das optische Element 24 in einem weiten Bereich zusätzlich verbessert.

Über die beschriebenen Strahlformungseigenschaften hinaus kann das optische Element 24 auch als optisches Filter eingesetzt werden. Wird das remittierte Lichtbündel 20 im Nahbereich, also durch den konvergierenden Teilbereich 24a, durch Aufrauen, Wegspiegeln, Absorbieren oder dergleichen bedämpft, so kann die Gesamtenergie im Nahbereich reduziert und so die energetische Abstandscharakteristik angepasst werden. Hierdurch wird der benötigte Dynamikumfang der dem Lichtempfänger 26 nachfolgenden Auswerteschaltungen reduziert, mit den Vorteilen geringerer Kosten, Verlustwärme und Rauschens.

Auch ansonsten lassen sich zusätzliche Funktionen in das optische Element 24 integrieren. Als transparentes Funktionsteil lässt sich eine Freiformlinse prinzipiell aus Kunststoff oder Glas herstellen und dadurch mit funktionalen Oberflächen- oder Volumeneigenschaften dieses Materials oder zusätzlich aufgebrachten Schichten kombinieren. Beispiele sind spektrale Befilterung, räumliche Befilterung, sei sie homogen, inhomogen oder strukturiert, Volumen- oder Oberflächenstreuung, Fluoreszenz oder Lumineszenz, Polarisationsfilterung beispielsweise durch Wire-Grid Polarisatorschichten und diffraktiv-optischen Eigenschaften.

## Patentansprüche

1. Optoelektronischer Sensor (10) nach dem Prinzip der Triangulation zur Erfassung eines Objekts (36) in einem Überwachungsbereich (18) mit einem Lichtsender (12) zum Aussenden eines Lichtbündels (16) und einem um einen Basisabstand gegen den Lichtsender (12) versetzt angeordneten ortsauflösenden Lichtempfänger (26) zum Empfangen des von dem Objekt (36) remittierten Lichtbündels (20), wobei dem Lichtempfänger (26) eine Empfangsoptik (22) sowie ein optisches Element (24) zwischen Lichtempfänger (26) und Empfangsoptik (22) vorgeordnet ist, das optische Element (24) einen konvergierenden Teilbereich (24a) und einen divergierenden Teilbereich (24c) aufweist und so angeordnet ist, dass ein remittiertes Lichtbündel (20) von einem Objekt (36) in einem Nahbereich des Überwachungsbereichs (18) durch den konvergierenden Teilbereich (24a) und ein remittiertes Lichtbündel (20) aus einem Fernbereich des Überwachungsbereichs (18) durch den divergierenden Teilbereich (24c) fällt,
**dadurch gekennzeichnet,**
**dass** das optische Element (24) eine Freiformfläche (34a-b) mit dem konvergierenden Teilbereich (24a) und dem divergierenden Teilbereich (24c) aufweist und so in einem Schnitt längs des Basisabstands die Grundform einer Welle aufweist,
das optische Element (24) zusätzlich quer zu der Welle eine konvergierende Krümmung aufweist und
die Freiformfläche lokale Krümmungen und/oder lokale Gradienten der Krümmung aufweist und so Teilpupillenbündel des remittierten Lichtbündels konzentriert und/oder vermischt.

2. Sensor (10) nach Anspruch 1,
wobei das optische Element (24) einen neutralen Teilbereich (24b) zwischen dem konvergierenden Teilbereich (24a) und dem divergierenden Teilbereich (24c) aufweist.

3. Sensor (10) nach Anspruch 1, wobei die Freiformfläche (34a-b) aus der Grundform weiter optimiert ist, um schräg einfallende Lichtbündel zu berücksichtigen.

4. Sensor (10) nach einem der vorhergehenden Ansprüche, wobei das optische Element (24) zusätzlich eine prismatische Verkippung des remittierten Lichtbündels (20) bewirkt.

5. Sensor (10) nach einem der vorhergehenden Ansprüche, wobei das optische Element (24) zu einem rechteckigen oder trapezförmigen Rahmen beschnitten ist.

6. Sensor (10) nach einem der vorhergehenden Ansprüche, wobei der divergierende Teilbereich (24c) Dämpfungseigenschaften für das remittierte Lichtbündel (20) aufweist.

7. Sensor (10) nach einem der vorhergehenden Ansprüche, wobei das optische Element (24) zugleich als optisches Filter ausgebildet ist.

8. Sensor (10) nach einem der vorhergehenden Ansprüche, der als hintergrundausblendender Lichttaster ausgebildet ist, bei dem der Lichtempfänger (26) einen Nahbereich (26a) und einen Fernbereich (26b) mit einem Trennsteg (32) dazwischen aufweist und der einen Schaltausgang (30) aufweist, dessen Schaltzustand davon abhängt, ob ein Objekt (36) im Nahbereich erfasst ist.

9. Verfahren zur Erfassung eines Objekts (36) in einem Überwachungsbereich (18) nach dem Prinzip der Triangulation, bei dem ein Lichtbündel (16) ausgesandt und eine Empfangsposition des an dem Objekt (36) remittierten Lichtbündel (20) bestimmt wird, wobei das remittierte Lichtbündel (20) zunächst in einer Empfangsoptik (22) gebündelt und anschließend in einem optischen Element (24) zusätzlich strahlgeformt wird, wobei ein von einem Objekt (36) in einem Nahbereich des Überwachungsbereichs (18) remittiertes Lichtbündel (20) in einem konvergierenden Teilbereich (24a) des optischen Elements (24) und ein von einem Objekt (36) in einem Fernbereich des Überwachungsbereichs (18) remittiertes Lichtbündel (20) in einem divergierenden Teilbereich (24c) des optischen Elements (24) strahlgeformt wird,
**dadurch gekennzeichnet,**
**dass** das optische Element (24) eine Freiformfläche (34a-b) mit dem konvergierenden Teilbereich (24a) und dem divergierenden Teilbereich (24c) aufweist und so in einem Schnitt längs eines Basisabstands von einem das Lichtbündel (16) aussendenden Lichtsender (12) zu einem versetzt angeordneten Lichtempfänger (26) die Grundform einer Welle aufweist,
das optische Element zusätzlich quer zu der Welle eine konvergierende Krümmung aufweist und
Teitpupillenbündel (20a) des remittierten Lichtbündels (20) durch die Freiformfläche (34a-b) des optischen Elements (24) konzentriert und/oder vermischt werden, indem die Freiformfläche (34a-b) lokale Krümmungen und/oder lokale Gradienten der Krümmung aufweist.

## Claims

1. An optoelectronic sensor (10) according to the principle of triangulation for detecting an object (36) in a monitoring region (18), the sensor (10) comprising a light transmitter (12) for transmitting a light bundle (16) and a spatially resolving light receiver (26) offset from the light transmitter (12) by a base distance for receiving the remitted light bundle (20) remitted by the object (36), wherein a receiving optics (22) and an optical element (24) between light receiver (26) and receiving optics (22) are arranged in front of the light receiver (26), the optical element (24) comprising a converging partial region (24a) and a diverging partial region (24c) and being arranged such that a remitted light bundle (20) from an object (36) in a near range of the monitoring region (18) passes through the converging partial region (24) and a remitted light bundle (20) from an object (36) in a far range of the monitoring region (18) passes through the diverging partial region (24c),
**characterized in that** the optical element (24) comprises a free-form surface (34a-b) with the converging partial region (24a) and the diverging partial region (24c) and thus, in a section along the base distance, has the basic shape of a wave,
the optical element (24) additionally comprises a converging curvature transverse to the wave
and the free-form surface (34a-b) has local curvatures and/or local gradients of curvature and thus concentrates and/or mixes partial pupil bundles (20a) of the remitted light bundle (20).

2. The sensor (10) according to claim 1,
wherein the optical element (24) comprises a neutral partial region (24b) between the converging partial region (24a) and the diverging partial region (24c).

3. The sensor (10) according to claim 1,
wherein the free-form surface (34a-b) is further optimized from the basic shape in order to take oblique incident light bundles into account.

4. The sensor (10) according to one of the preceding claims,
wherein the optical element (24) additionally causes a prismatic tilting of the remitted light bundle (20).

5. The sensor (10) according one of the preceding claims,
wherein the optical element (24) is trimmed into a rectangular or trapezoidal frame.

6. The sensor (10) according to one of the preceding claims,
wherein the diverging partial region (24c) has attenuating properties for the remitted light bundle (20).

7. The sensor (10) according to one of the preceding claims,
wherein the optical element (24) is also configured as an optical filter.

8. The sensor (10) according to one of the preceding claims,
the sensor (10) being configured as a background suppressing sensor, wherein the light receiver (26) comprises a near region (26a) and a far region (26b) with a separating element (32) therebetween, and having a switching output (30) whose switching state depends on whether an object (36) is detected in the near range.

9. A method for detecting an object (36) in a monitoring region (18) according to the principle of triangulation, wherein a light bundle (16) is transmitted and a receiving position of the light bundle (20) remitted from the object (36) is determined, wherein the remitted light bundle (20) is focused by a receiving optics and then additionally beam-shaped in an optical element (24), wherein a light bundle (20) remitted by an object (36) in a near range of the monitoring region (18) is beam-shaped in a converging partial region (24a) of the optical element (24) and a light bundle (20) remitted by an object (36) in a far range of the monitored region (18) is beam-shaped in a diverging partial region (24c) of the optical element (24),
**characterized in that** that the optical element (24) comprises a free-form surface (34a-b) with the converging partial region (24a) and the diverging partial region (24c) and thus, in a section along a base distance from a light transmitter (12) transmitting the light bundle (16) to a light receiver (26) arranged at an offset, has the basic shape of a wave,
the optical element (24) additionally comprises a converging curvature transverse to the wave,
and partial pupil bundles (20a) of the remitted light bundle (20) are concentrated and/or mixed by the free-form surface (34a-b) of the optical element (24) **in that** the free-form surface (34a-b) has local curvatures and/or local gradients of curvature.

## Revendications

1. Capteur optoélectronique (10) selon le principe de la triangulation pour détecter un objet (36) dans une zone à surveiller (18), comportant un émetteur de lumière (12) pour émettre un faisceau lumineux (16) et un récepteur de lumière (26) à résolution locale agencé en décalage d'une distance de base par rapport à l'émetteur de lumière (12) et destiné à recevoir le faisceau lumineux (20) réémis par l'objet (36), dans lequel une optique de réception (22) est agencée en amont du récepteur de lumière (26) et un élément optique (24) est agencé entre le récepteur de lumière (26) et l'optique de réception (22), l'élément optique (24) comprend une zone partielle convergente (24a) et une zone partielle divergente (24c) et est agencé de telle sorte qu'un faisceau lumineux (20) réémis tombe depuis un objet (36) dans une zone proche de la zone à surveiller (18) à travers la zone partielle convergente (24a), et un faisceau lumineux (20) réémis tombe depuis une zone lointaine de la zone à surveiller (18) à travers la zone partielle divergente (24c),
**caractérisé en ce que**
l'élément optique (24) présente une surface de forme libre (34a - b) avec la zone partielle convergente (24a) et avec la zone partielle divergente (24c) et présente ainsi la forme de base d'une onde en coupe le long de la distance de base,
l'élément optique (24) présente en supplément une courbure convergente transversalement à l'onde, et
la surface de forme libre présente des courbures locales et/ou des gradients locaux de la courbure et ainsi elle concentre et/ou mélange des faisceaux de pupille partiels du faisceau lumineux réémis.

2. Capteur (10) selon la revendication 1,
dans lequel l'élément optique (24) présente une zone partielle neutre (24b) entre la zone partielle convergente (24a) et la zone partielle divergente (24c).

3. Capteur (10) selon la revendication 1,
dans lequel la surface de forme libre (34a - b) est optimisée davantage à partir de la forme de base, afin de prendre en compte des faisceaux lumineux qui sont incidents en oblique.

4. Capteur (10) selon l'une des revendications précédentes,
dans lequel l'élément optique (24) provoque en supplément une inclinaison prismatique du faisceau lumineux (20) réémis.

5. Capteur (10) selon l'une des revendications précédentes,
dans lequel l'élément optique (24) est coupé pour donner un cadre rectangulaire ou trapézoïdal.

6. Capteur (10) selon l'une des revendications précédentes,
dans lequel la zone partielle divergente (24c) présente des propriétés d'atténuation pour le faisceau lumineux (20) réémis.

7. Capteur (10) selon l'une des revendications précédentes,
dans lequel l'élément optique (24) est réalisé simultanément en tant que filtre optique.

8. Capteur (10) selon l'une des revendications précédentes,
qui est réalisé en tant que détecteur photosensible à élimination de l'arrière-plan dans lequel le récepteur de lumière (26) présente une zone proche (26a) et une zone lointaine (26b) avec une barrette de séparation (32) entre les deux et qui présente une sortie de commutation (30) dont l'état de commutation dépend de savoir si un objet (36) est détecté dans la zone proche.

9. Procédé de détection d'un objet (36) dans une zone à surveiller (18) selon le principe de la triangulation, dans lequel on émet un faisceau lumineux (16) et on détermine une position de réception du faisceau lumineux (20) réémis sur l'objet (36), le faisceau lumineux (20) réémis étant tout d'abord concentré dans une optique de réception (22) et ensuite formé en rayon en supplément dans un élément optique (24), dans lequel un faisceau lumineux (20) réémis par un objet (36) dans une zone proche de la zone à surveiller (18) est formé en rayon dans une zone partielle convergente (24a) de l'élément optique (24), et un faisceau lumineux (20) réémis par un objet (36) dans une zone lointaine de la zone à surveiller (18) est formé en rayon dans une zone partielle divergente (24c) de l'élément optique (24), **caractérisé en ce que**
l'élément optique (24) présente une surface de forme libre (34a - b) avec la zone partielle convergente (24a) et avec la zone partielle divergente (24c) et présente ainsi la forme de base d'une onde en coupe le long de la distance de base depuis un émetteur de lumière (12) émettant le faisceau lumineux (16) jusqu'à un récepteur de lumière (26) agencé en décalage, l'élément optique présente en supplément une courbure convergente transversalement à l'onde, et
des faisceaux de pupille partiels (20a) du faisceau lumineux (20) réémis sont concentrés et/ou mélangés par la surface de forme libre (34a - b) de l'élément optique (24) du fait que la surface de forme libre (34a - b) présente des courbures locales et/ou des gradients locaux de la courbure.
